(19) Europäisches Patentamt
European Patent Office
Office européen des brevets

(11) **EP 2 627 893 B1**

(12) **EUROPÄISCHE PATENTSCHRIFT**

(45) Veröffentlichungstag und Bekanntmachung des Hinweises auf die Patenterteilung:
**26.05.2021 Patentblatt 2021/21**

(21) Anmeldenummer: **11755324.8**

(22) Anmeldetag: **09.09.2011**

(51) Int Cl.:
*F02N 11/08* *(2006.01)*   *H02P 1/04* *(2006.01)*

(86) Internationale Anmeldenummer:
**PCT/EP2011/065677**

(87) Internationale Veröffentlichungsnummer:
**WO 2012/048969 (19.04.2012 Gazette 2012/16)**

(54) **SPANNUNGSSTEUERUNG IN EINEM BORDNETZ**

VOLTAGE CONTROL IN A VEHICLE ELECTRICAL SYSTEM

COMMANDE DE TENSION DANS UN RÉSEAU DE BORD

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2010 DE 102010042396**

(43) Veröffentlichungstag der Anmeldung:
**21.08.2013 Patentblatt 2013/34**

(73) Patentinhaber: **Robert Bosch GmbH**
**70442 Stuttgart (DE)**

(72) Erfinder:
• **RETTIG, Rasmus**
**72760 Reutlingen (DE)**
• **SCHIEMANN, Werner**
**70734 Fellbach (DE)**

(56) Entgegenhaltungen:
**EP-A1- 1 041 277     DE-A1-102010 046 232**
**US-B1- 6 335 609**

## Beschreibung

Die Erfindung betrifft ein Verfahren und eine Vorrichtung zur Aufrechterhaltung einer vorbestimmten Spannung in einem batteriegestützten Bordnetz.

Stand der Technik

Ein Verbrennungsmotor eines Kraftfahrzeugs wird üblicherweise mittels eines elektrischen Anlassers in Gang gesetzt. Die für den Betrieb des Anlassers erforderliche Energie wird einer Batterie des Bordnetzes des Kraftfahrzeugs entnommen. Durch die Belastung der Batterie durch den Anlasser kann eine Bordspannung während des Anlassvorgangs so weit einbrechen, dass andere Verbraucher im Bordnetz nicht mit ausreichender Spannung versorgt werden. Insbesondere ein von einem Mikroprozessor gesteuerter Verbraucher kann empfindlich auf eine zu geringe Bordspannung reagieren und für eine vorbestimmte Zeitspanne nicht oder nur eingeschränkt funktionieren. Der Verbraucher kann ein Steuergerät sein, das für den Betrieb und/oder die Sicherheit des Kraftfahrzeugs relevant ist.

Ist das Kraftfahrzeug mit einer Start-Stopp-Automatik ausgerüstet, die den Verbrennungsmotor bereits bei einem kurzen Halt abstellt und erst bei Bedarf wieder anlässt, so können Anlassvorgänge während einer Fahrt des Kraftfahrzeugs relativ häufig und temporäre Ausfälle eines Verbrauchers besonders gravierend sein. Der Erfindung liegt daher die Aufgabe zu Grunde, ein Verfahren und eine Vorrichtung zur Sicherstellung einer vorbestimmten Bordspannung während eines Anlassvorgangs bereitzustellen.

Das Dokument EP 1 041 277 A1 beschreibt eine Steuereinheit für einen Anlasser zum Schutz vor Verschleiß.

Die Erfindung löst diese Aufgaben mittels eines Verfahrens mit den Merkmalen des Anspruchs 1 und eine Vorrichtung mit den Merkmalen des Anspruchs 6. Unteransprüche geben bevorzugte Ausführungsformen an.

Ein erfindungsgemäßes Verfahren zur Aufrechterhaltung einer vorbestimmten Spannung in einem batteriegestützten Bordnetz während des Betriebs eines elektrischen Anlassers umfasst Schritte des Betreibens des elektrischen Anlassers am Bordnetz während eines ersten Zeitabschnitts in Serie mit einem Begrenzungswiderstand, um den durch den Anlasser fließenden Strom zu begrenzen und des Betreibens des elektrischen Anlassers am Bordnetz während eines zweiten Zeitabschnitts mit einem verringerten Begrenzungswiderstand, um eine vom Anlasser umgesetzte Leistung zu erhöhen. Dabei wird ein Übergang vom ersten zum zweiten Zeitabschnitt auf der Basis von während des ersten Zeitabschnitts am Begrenzungswiderstand abgetasteten elektrischen Kenngrößen gesteuert.

Hierdurch kann sicher gestellt werden, dass die Verringerung des Begrenzungswiderstands zu einem optimierten Zeitpunkt erfolgt, das heißt, so früh wie möglich, um die vom Anlasser umgesetzte Leistung zu maximieren und dadurch den Anlassvorgang zu beschleunigen, und gleichzeitig so spät wie nötig, um einen Einbruch der Batteriespannung unter einen vorbestimmten Wert zu vermeiden. Durch die Steuerung in Abhängigkeit von individuell bei jedem Anlassvorgang erfassten Werten können variable Einflussgrößen wie ein mechanischer Widerstand des Verbrennungsmotors bei unterschiedlichen Temperaturen, Alterungs- und Temperatureinflüsse auf die Batterie und eine Stromentnahme durch weitere Verbraucher berücksichtigt werden.

Während der ersten Phase wird ein Schwellenwert bestimmt und die zweite Phase kann eingeleitet werden, wenn der durch den Begrenzungswiderstand fließende Strom den bestimmten Schwellenwert unterschreitet. Dadurch kann das Einleiten der zweiten Phase bzw. das Verringern des Begrenzungswiderstands auf der Basis einer relativ einfachen Bestimmung durchgeführt werden.

Die Bestimmung des Schwellenwerts wird auf der Basis von Messungen durchgeführt, die zu vorbestimmten Zeitpunkten erhoben werden, um sowohl induktive Einflüsse als auch eine veränderliche elektromotorische Gegenkraft des Anlassers während des Messzeitraums zu minimieren. Die Zeitpunkte richten sich nach Induktivitäten von Leitungen und der Geschwindigkeit des Zuwachses der elektromotorische Gegenkraft während des Anlassvorgangs.

Das Verfahren kann auf der Basis einer Vielzahl von zeitlich entzerrten Messungen durchgeführt werden, um den optimierten Umschaltzeitpunkt zuerst grob und dann immer feiner zu bestimmen.

In einer zur Bestimmung und Überwachung eines Schwellenwerts für den Strom alternativen Ausführungsform kann das Verfahren Schritte des Bestimmens eines Zeitpunkts auf der Basis von Spannungsmessungen am Begrenzungswiderstand während der ersten Phase; und des Einleitens der zweiten Phase, wenn der bestimmte Zeitpunkt erreicht ist, umfassen. Diese Bestimmung kann auf der Basis von Differentialgleichungen durchgeführt werden und kann eine Prognose des optimierten Umschaltzeitpunkts erlauben, ohne den durch den Anlasser fließenden Strom überwachen zu müssen.

Eine erfindungsgemäße Vorrichtung zur Aufrechterhaltung einer vorbestimmten Spannung in einem batteriegestützten Bordnetz während des Betriebs eines elektrischen Anlassers umfasst einen steuerbaren Begrenzungswiderstand zum Betreiben des Anlassers am Bordnetz in Serie mit dem Widerstand, eine erste und eine zweite Abtasteinrichtung zur Aufnahme von Spannungen an unterschiedlichen Anschlüssen des Widerstands, einen Zeitgeber und eine Steuereinrichtung zur Verringerung des Begrenzungswiderstands entsprechend dem oben beschriebenen Verfahren.

Die Vorrichtung erlaubt den optimierten Übergang von der ersten in die zweite Phase, ohne Sensoren zu erfordern, die in Entfernung zum Begrenzungswiderstand anzubringen sind.

Kurze Beschreibung der Figuren

Nachfolgend wird die Erfindung mit Bezug auf die beigefügten Figuren genauer erklärt, in denen:

Fig. 1    einen Stromlaufplan eines Bordnetzes in einem Kraftfahrzeug;

Fig. 2    eine Stromsteuerung zum Einsatz im Bordnetz von Fig. 1;

Fig. 3    Verläufe von Spannungen und Strömen im Bordnetz aus Fig. 1; und

Fig. 4    ein Ablaufdiagramm eines Verfahrens an Bord des Kraftfahrzeugs von Fig. 1

darstellt.

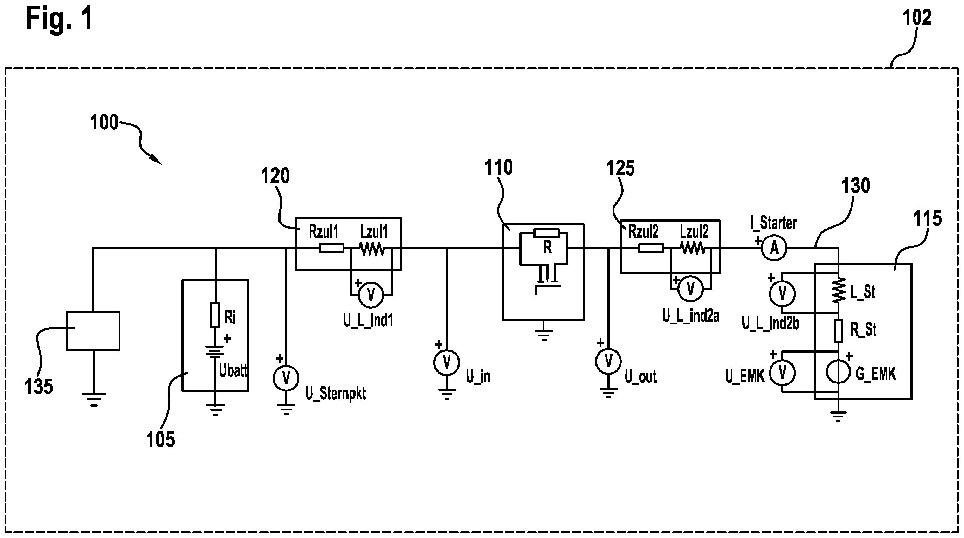

Fig. 1 zeigt einen Stromlaufplan eines Bordnetzes 100 in einem Kraftfahrzeug 102. Das Bordnetz 100 umfasst eine Batterie 105, einen Begrenzungswiderstand 110, einen Anlasser 115 sowie eine erste Leitung 120 von der Batterie 105 zum Begrenzungswiderstand 110 und eine zweite Leitung 125 vom Begrenzungswiderstand 110 zum Anlasser 115. In die zweite Leitung 125 ist ein Starterrelais 130 eingefügt. Ferner ist parallel zur Batterie 105 ein Verbraucher 135 geschaltet, der stellvertretend für eine Anzahl unterschiedlicher Verbraucher stehen kann.

Der Verbraucher 135 wird im Bordnetz 100 betrieben und erfordert dafür die Bereitstellung einer Betriebsspannung, die einen vorbestimmten Schwellenwert nicht unterschreiten darf. Beispielsweise kann der Verbraucher 135 eine elektronische oder mikroprozessorgesteuerte Komponente umfassen, die nach einem Unterschreiten der Versorgungsspannung unter den Schwellenwert rücksetzt (einen Reset ausführt) und danach eine gewisse Rücksetzzeit benötigt, um wieder einsatzfähig zu sein. Es ist Aufgabe der Erfindung, einen Spannungseinbruch an der Batterie 105 unter diesen Schwellenwert zu vermeiden.

Das Kraftfahrzeug 102 umfasst einen nicht dargestellten Verbrennungsmotor, der mittels des Anlassers 115 in Gang gesetzt werden kann. Läuft der Verbrennungsmotor, so treibt er einen ebenfalls nicht dargestellten Generator an, der die Batterie 105 auflädt. Während eines Anlassvorgangs des Verbrennungsmotors ist der Generator jedoch nicht in Betrieb oder bewirkt nur eine vernachlässigbare Aufladung der Batterie 105.

Um den Verbrennungsmotor anzulassen, wird das Starterrelais 130 geschlossen, so dass der Anlasser 115 im Wesentlichen parallel zur Batterie 105 geschaltet ist. Der Anlasser 115 umfasst einen leistungsfähigen Gleichstrom-Elektromotor, der daraufhin beginnt, sich mit wachsender Geschwindigkeit zu drehen. Dabei treibt der Elektromotor den Verbrennungsmotor an, bis dieser startet. Spätestens wenn der Verbrennungsmotor läuft, wird das Starterrelais 130 geöffnet und der Anlasser 115 bleibt allmählich stehen. Ein Anlassvorgang dauert üblicherweise mehrere Sekunden, gleichwohl wird im Folgenden nur ein kurzer erster Abschnitt des Anlassvorgangs betrachtet.

Unmittelbar nach dem Schließen des Starterrelais 130 weist der still stehende Anlasser 115 eine Gegen-EMK nahe Null auf, so dass in einem Stromkreis 140 ein großer Strom von der Batterie 105 durch die erste Leitung 120, den Begrenzungswiderstand 110, die zweite Leitung 125, das Starterrelais 130 und den Anlasser 115 fließt. Da die Batterie 105 einen von Null verschiedenen Innenwiderstand aufweist, bricht die an ihren Anschlüssen verfügbare Bordspannung in Abhängigkeit des fließenden Stroms ein, so dass die Gefahr besteht, dass der Verbraucher 135 rücksetzt.

Es ist bekannt, dass das Einbrechen der Bordspannung vermindert werden kann, indem der Begrenzungswiderstand 110 auf einen vorbestimmten Wert größer als Null Ohm gesetzt wird. Um für den Anlassvorgang eine durch den Anlasser 115 umgesetzte Leistung zu maximieren, kann der Begrenzungswiderstand 110 nach einer vorbestimmten Zeit verringert werden. Ein Zeitpunkt, zu dem der Begrenzungswiderstand 110 verringert werden kann, ohne dass die Bordspannung den vorbestimmten Schwellenwert unterschreitet, wird üblicherweise im Rahmen einer Konzeption des Bordnetzes 100 einmalig bestimmt und danach nicht mehr verändert. Ein Verringern des Begrenzungswiderstands 110 auf der Basis von Messungen im Bereich der Batterie 105 erfordert Messeinrichtungen, die aus Kostengründen möglichst vermieden werden.

Wird der Begrenzungswiderstand 110 zu früh oder zu stark verringert, so besteht die Gefahr des Einbrechens der Bordspannung, so dass der Verbraucher 135 rücksetzt. Wird der Begrenzungswiderstand 110 jedoch zu spät oder zu wenig verringert, dann ist die vom Anlasser 115 umgesetzte Leistung nicht maximiert, so dass der Anlassvorgang des Verbrennungsmotors beeinträchtigt zw. verlängert sein kann.

Um die im Einzelnen stattfindenden Abläufe während eines Anlassvorgangs genauer zu betrachten, sind die Batterie 105, der Begrenzungswiderstand 110, der Anlasser 115 und die Leitungen 120 und 125 in Fig. 1 als Ersatzschaltbilder dargestellt, die ohmsche Widerstände, Induktivitäten und eine Spannungsquelle umfassen.

Die Batterie 105 stellt eine Spannung Ubatt bereit; ein Innenwiderstand der Batterie 105 beträgt Ri. Die erste Leitung 120 umfasst einen Innenwiderstand Rzul1 und eine Induktivität Lzul1. Der Begrenzungswiderstand 110 beträgt R, wobei der Begrenzungswiderstand beispielsweise mittels eines Halbleiters oder eines elektromechanisch gesteuerten Schalters zwischen zwei oder mehr Werten R1, R2,... veränderlich ist, und R1 > R2 >... gilt. Der letzte verwendete Widerstandswert Ri kann Null bzw. annähernd Null betragen. Die zweite Leitung 125 umfasst einen Innenwiderstand Rzul2 und eine Induktivität Lzul2. Der Anlasser 115 umfasst eine Induktivität L_St, einen Innenwiderstand R_St und eine Spannungsquelle G_EMK, deren bereitgestellte Spannung der Gegeninduktionsspannung (elektromotorische Gegenkraft, Gegen-EMK) des Anlassers entspricht und von der Drehzahl des Anlassers abhängt und der Batteriespannung U_batt entgegen wirkt.

Das Starterrelais 130 wird als ideal angenommen bzw. sein elektrischer Widerstand im geschlossenen Zustand durch die zweite Leitung 125 modelliert. Verbindungen, die an Masse gehen, werden ebenfalls als ideal angenommen bzw. im restlichen Stromkreis 140 modelliert.

Es werden exemplarisch folgende Werte im Bordnetz 100 angenommen:

| | |
|---|---|
| Ri | 6mΩ |
| Rzul | 2mΩ |
| Lzul1 | 5uH |
| Rzul2 | 5mΩ |
| Lzul2 | 1uH |
| L_St | 4,3uH |
| R_St | 1,75mΩ |
| G_EMK | zeitabhängig, siehe Text |

In Fig. 1 sind Spannungsmesser mit Bezeichnungen von Spannungen dargestellt. Die Spannungsmesser zeigen, an welcher Stelle im Bordnetz 100 welche Spannung anliegt. Entsprechendes gilt für einen Strommesser im Bereich des Starterrelais 130.

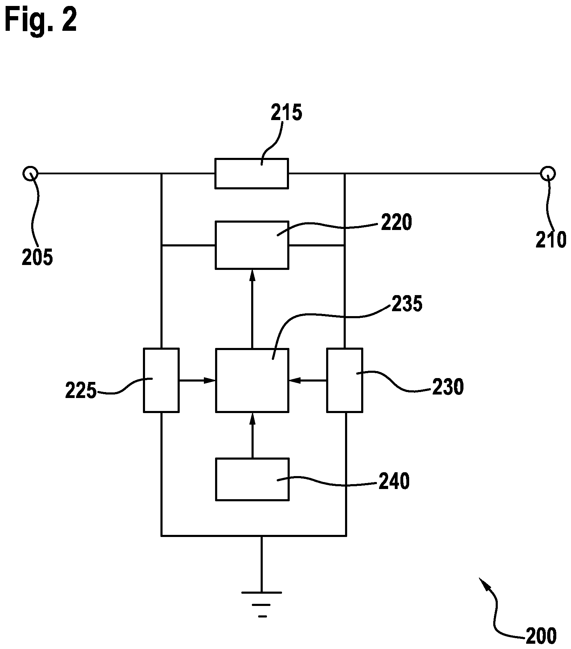

Fig. 2 zeigt eine integrierte Stromsteuerung 200 zum Einsatz an Stelle des Begrenzungswiderstands 110 in Fig. 1. Die Stromsteuerung 200 umfasst einen ersten Anschluss 205 zur Verbindung mit der ersten Leitung 120 und einen zweiten Anschluss 210 zur Verbindung mit der zweiten Leitung 125. Zwischen den Anschlüssen 205 und 210 ist ein Begrenzungswiderstand 215 angeordnet, der selektiv mittels eines steuerbaren Schalters 220 auf Null verringerbar ist. Spannungen zwischen den Anschlüssen 205 bzw. 210 und Masse werden mittels Spannungsmessern 225 bzw. 230 aufgenommen und einer Steuereinrichtung 235 bereitgestellt. Die Steuereinrichtung 235 ist mit einem Taktgeber 240 verbunden und dazu eingerichtet, den Schalter 220 zu steuern. Der Taktgeber 240 ist dazu eingerichtet, ein Zeitnormal zur Bestimmung von Zeiten bzw. Zeitabständen zwischen Ereignissen, insbesondere Messzeitpunkten für die Spannungsmesser 225 und 230, bereitzustellen.

In der Darstellung von Fig. 2 liegt zwischen den Anschlüssen 205 und 210 je nach Stellung des Schalters 220 der Begrenzungswiderstand 215 oder der Nullwiderstand. In anderen Ausführungsformen können mehrere Begrenzungswiderstände 215 und gegebenenfalls auch mehrere Schalter 220 vorgesehen sein, um mehrere unterschiedliche elektrische Widerstände zwischen den Anschlüssen 205 und 210 einzustellen. In einer Ausführungsform ist der zwischen den Anschlüssen 205 und 210 liegende Widerstand durch eine Halbleiteranordnung realisiert, die vorzugsweise stufenlos durch die Steuereinrichtung 235 gesteuert ist.

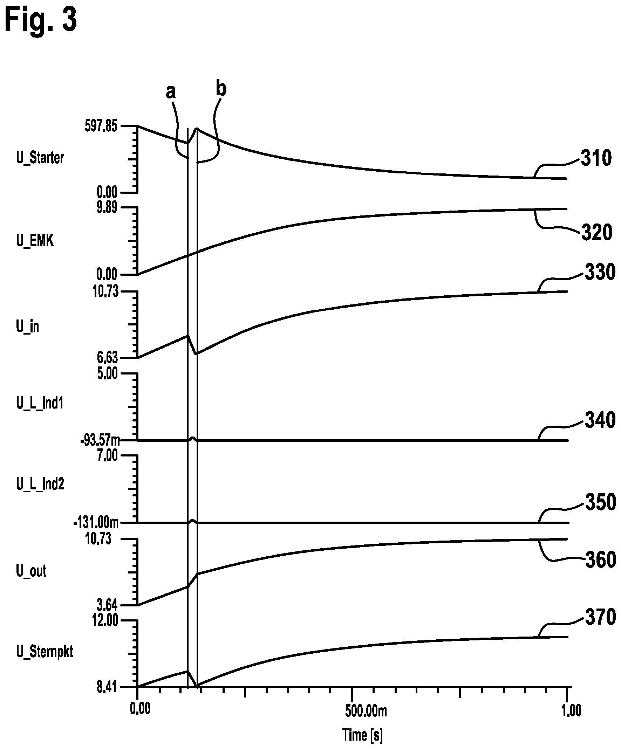

Fig. 3 zeigt Verläufe von Spannungen und Strömen im Bordnetz aus Fig. 1. In einer horizontalen Richtung ist eine Zeit, in vertikaler Richtung Verläufe 310-370 eines Stroms bzw. verschiedener Spannungen angetragen.

Der erste Verlauf 310 beschreibt den Strom I_Starter durch den Anlasser 115. Wie aus Fig. 1 ersichtlich ist, fließt zu jedem Zeitpunkt der gleiche Strom I_Starter durch alle Zweige des Stromkreises 140, da es sich um eine reine Serienschaltung handelt. Zum Zeitpunkt 0 wird der Anlassvorgang eingeleitet, indem das Starterrelais 130 geschlossen wird. I_Starter steigt rasch bis auf knapp 600 A an und fällt von dort entsprechend einer logarithmischen Funktion ab. Ein variabler mechanischer Widerstand des Verbrennungsmotors kann zu einer überlagerten periodischen Variation des Anlasserstroms I_Starter führen und wird in der vorliegenden Betrachtung außer Betracht gelassen. Zum Zeitpunkt a bei ca. 130 ms wird der Begrenzungswiderstand 110 auf 0 reduziert. I_Starter steigt daraufhin bis zum Zeitpunkt b bei ca. 140 ms erneut bis auf knapp 600 A an und fällt erneut logarithmisch ab. Der durch den Anlasser 115 fließende Strom I_Starter ist hauptsächlich von einer Drehzahl des Anlassers 115 abhängig. Mit steigender Drehzahl steigt auch der Spannungsabfall am Anlasser 115 und der durch den Anlasser 115 fließende Strom sinkt.

Der unterste Verlauf 370 beschreibt die Spannung U_Sternpkt an der Batterie 105, die auch die Versorgungsspannung des Verbrauchers 135 ist. U_Sternpkt beträgt zu Beginn des Anlassvorgangs 12 V und bricht dann schnell auf ca. 8,4 V ein. Danach steigt U_Sternpkt im Wesentlichen umgekehrt proportional zu I_Starter an und erreicht zum Zeitpunkt a ca. 9,2 V. Zwischen den Zeitpunkten a und b sinkt U_Sternpkt erneut auf ca. 8,4 V ab und steigt dann wieder im Wesentlichen umgekehrt proportional zu I_Starter an.

Der zweite Verlauf 320 von oben in Fig. 3 beschreibt die Gegen-EMK G_EMK, die beim Betrieb des Anlassers 115 entsteht und abhängig von der Drehzahl des Anlassers 115 ist. G_EMK steigt logarithmisch bis auf ca. 8 V, wobei der Anstieg gleichmäßig genug ist, um in einem ausreichend kurzen Abschnitt als linear angesehen zu werden.

Der dritte Verlauf 320 von oben in Fig. 3 beschreibt die Eingangsspannung U_in, die an einem Punkt zwischen der ersten Leitung 120 und dem Begrenzungswiderstand 110 gegen Masse messbar ist. U_in ist die Spannung, die der Spannungsmesser 225 in Fig. 2 abtastet. Der sechste Verlauf 360 von oben in Fig. 3 beschreibt die Ausgangsspannung U_out, die an einem Punkt zwischen der ersten Leitung 120 und dem Begrenzungswiderstand 110 gegen Masse messbar ist. U_out ist die Spannung, die der Spannungsmesser 230 in Fig. 2 abtastet.

U_in und U_out folgen qualitativ U_Sternpkt, indem sie zum Zeitpunkt 0 von einem Wert nahe der Leerlaufspannung der Batterie 105 rasch einbrechen und danach logarithmisch bis zum Zeitpunkt a ansteigen, bis zum Zeitpunkt b erneut abfallen und darauf folgend wieder logarithmisch ansteigen.

Der vierte Verlauf 340 von oben in Fig. 3 beschreibt die erste Induktionsspannung U_L_ind1 an der Induktivität L_zul1 der ersten Leitung 120 in Fig. 1. In entsprechender Weise beschreibt der fünfte Verlauf 350 von oben in Fig. 3 die zweite Induktionsspannung U_L_ind2 an der Induktivität L_zul2 der ersten Leitung 120 in Fig. 1. Beide Induktionsspannungen U_L_ind sind nur jeweils in einem kurzen Zeitabschnitt nach einer Veränderung des Stroms I_Starter positiv. Diese Zeitabschnitte sind proportional zu den Beträgen der Induktivitäten Lzul1 und Lzul2 und den zu ihnen korrespondierenden Widerständen Rzul1 bzw. Rzul2. Die Zeitabschnitte beginnen jeweils zu den Zeitpunkten a und b.

Die induzierten Spannungen U_L_ind1 an der Induktivität L_zul1 und U_L_zul2 an der Induktivität L_zul2 klingen innert vergleichsweise kurzer Zeit so weit ab, dass sie im Verhältnis zu den anderen Spannungen des Stromkreises 140 vernachlässigbar sind. Für die angenommenen Werte der Elemente in Fig. 1 ist das nach ca. 2 - 4 ms der Fall. Nach Abklingen der Induktivitätseffekte betragen U_L_zul1, U_L_zul2 und U_L_St jeweils annähernd Null, so dass L_zul1, L_zul2 und L_St nicht weiter berücksichtigt werden.

Im Folgenden wird erläutert, wie anhand von Messungen am Begrenzungswiderstand 110 während der ersten Phase, also während der Begrenzungswiderstand 110 einen ersten vorbestimmten Wert R1 größter Null einnimmt, ein Schwellenwert I_umschalt bestimmt werden kann, der vom Strom I_Starter unterschritten werden muss, bevor der Begrenzungswiderstand 110 auf einen zweiten vorbestimmten Wert R2 verkleinert werden kann, ohne dass die Spannung U_Sternpkt um mehr als ein vorbestimmtes Maß absinkt. Angegebene Zeiten bestimmen sich ab dem Schließen des Starterrelais 130 zum Zeitpunkt 0. Soll der Begrenzungswiderstand 110 in mehr als zwei Phasen schrittweise verkleinert werden, so kann die im Folgenden angegebene Bestimmung entsprechend iterativ durchgeführt werden.

Der durch den Stromkreis 140 fließende Strom I_Starter lässt sich durch Messungen von U_in und U_out am Begrenzungswiderstand 110 wie folgt bestimmen:

$$I_{Starter} = \frac{U_{out} - U_{in}}{R1}.$$

Der Stromkreis 140 ist aufteilbar in einen Eingangskreis, der sich aus der Batterie 105 und der ersten Leitung 120 zusammensetzt, und einen Ausgangskreis, der sich aus dem Begrenzungswiderstand 110, der zweiten Leitung 125 und dem Anlasser 115 zusammensetzt.

Bevor die Gegen-EMK G_EMK im Ausgangskreis nennenswert groß wird indem sie einen Wert größer als ca. 100 mV erreicht, was bei den oben angegebenen Werten ungefähr zum Zeitpunkt 4 ms erfolgt, bestimmt sich der Ausgangskreis zu:

$$U_{out} = \left( R_{zul2} + R_{St} \right) \cdot I_{Starter}.$$

Dabei gilt:

$$I_{Starter} = \frac{U_{out} - U_{in}}{R1}$$

Nach ausreichendem Abklingen der zweiten Induktionsspannung U_L_Ind2, bei den oben angenommenen Werten ca. 2,5 ms nach Beginn des Anlassvorgangs, bestimmt sich der Eingangskreis zu zwei aufeinanderfolgenden Zeitpunkten zu:

$$U_{Batt} = I_1 \cdot \left( R_i + R_{zul1} \right) + U_{1in}$$

und:

$$U_{Batt} = I_2 \cdot (R_i + R_{zul1}) + U_{2in}.$$

Die erste Messung U_1in kann mit der Messung von U_in zusammenfallen, die zur Bestimmung des Ausgangskreises durchgeführt wird. Die zweite Messung U_2in erfolgt in einem möglichst großen zeitlichen Abstand zur ersten Messung, um die Genauigkeit des Verfahrens zu steigern, gleichzeitig aber früh genug, um nicht nach dem optimierten Umschaltzeitpunkt zu liegen. Bei den oben angegebenen Werten ist ein zeitlichter Abstand von ca. 5 - 50 ms zwischen den Messungen U_1in und U_2in sinnvoll, bevorzugt 15 - 30 ms, weiter bevorzugt ca. 20 ms.

Die letzten beiden Formeln ergeben subtrahiert voneinander:

$$(I_2 - I_1) \cdot (R_i + R_{zul1}) = U_{1in} - U_{2in}$$

Ferner gilt:

$$U_{Sternpkt} = U_{batt} - I \cdot R1 \qquad \text{bzw.} \qquad I = (U_{batt} - U_{Sternpkt})/R_i.$$

Ri kann als Maximalwert von der verwendeten Batterie 105 bzw. einem Batterietyp abhängig sein.

Zusammengefasst gilt:

$$U_{batt} = I \cdot (R_i + R_{zul1} + R1 + R_{zul2} + R_{St}) + U_{EMK}$$

Werden zwei Messungen von U_in bzw. U_out in einem kurzen zeitlichen Abstand (siehe oben) vorgenommen, so dass die Gegen-EMK G_EMK zwischen den Messungen als konstant angesehen werden kann, so gilt:

$$I_1 \cdot (R_i + R_{zul1} + R1 + R_{zul2} + R_{St}) = I_2 \cdot (R_i + R_{zul1} + R2 + R_{zul2} + R_{St}).$$

Der Strom durch den Anlasser 115 in der zweiten Phase, nach dem Verringern des Begrenzungswiderstands 110 von R1 auf R2, bemisst sich also zu:

$$I_2 = I_1 \cdot (R_i + R_{zul1} + R1 + R_{zul2} + R_{St})/(R_i + R_{zul1} + R2 + R_{zul2} + R_{St}).$$

Zum optimierten Zeitpunkt des Verringerns gilt daher:

$$I_{verringern} = \left( \frac{U_{batt} - U_{Sternpkt}}{R_i} \right) \cdot \frac{(R_i + R_{zul1} + R2 + R_{zul2} + R_{St})}{(R_i + R_{zul1} + R1 + R_{zul2} + R_{St})}.$$

Wie bereits ausgeführt wurde, können in obiger Formel die Terme $R_i$ - $R_{zun1}$ jeweils ersetzt werden durch

$$\frac{U_{1in} - U_{2in}}{I_2 - I_1}.$$

Der Term $U_{batt}$ - $U_{Stempkt}$ gibt an, um welchen Betrag die Batteriespannung U_batt beim Schließen des Starterrelais 130 maximal absinken darf. Der ohmsche Widerstand R_zul1 der ersten Leitung 120 kann einmalig, etwa im Rahmen einer Konzeption des Kraftfahrzeugs 102, bestimmt werden.

Auf der Basis von Messungen der Spannungen U_in bzw. U_out am Begrenzungswiderstand 110 zu vorbestimmten Zeitpunkten kann somit der Strom I_verringern bestimmt werden, der vom fließenden Strom I unterschritten werden muss, bevor der Begrenzungswiderstand 110 von R1 auf R2 verringert wird.

Der aktuell fließende Strom I kann fortlaufend oder periodisch mittels Messungen von U_in und U_out bestimmt und es kann überprüft werden, ob gilt:

$$I_1 < I_{verringern} \qquad \Leftrightarrow \qquad \frac{U_{out} - U_{in}}{R1} < I_{verringern}.$$

Auf die beschriebene Weise kann einfach und zuverlässig die Verringerung des Begrenzungswiderstands 110 von R1 auf R2 zum optimalen Zeitpunkt durchgeführt bzw. signalisiert werden, also so früh wie möglich, ohne dass die Sternpunktspannung U_Sternpkt weiter als durch $U_{batt}$-$U_{Sternpkt}$ vorgegeben einbricht. Dabei kann der Begrenzungswiderstand 110 auf einen positiven Wert oder auf Null verringert werden. Eine weitere stufenweise Verringerung des Begrenzungswiderstands 110 in entsprechender Weise ist möglich. In noch einer Ausführungsform kann die Verringerung auch stufenlos erfolgen. Die Vorrichtung 200 in Fig. 2 ist zur Durchführung dieses Verfahrens eingerichtet.

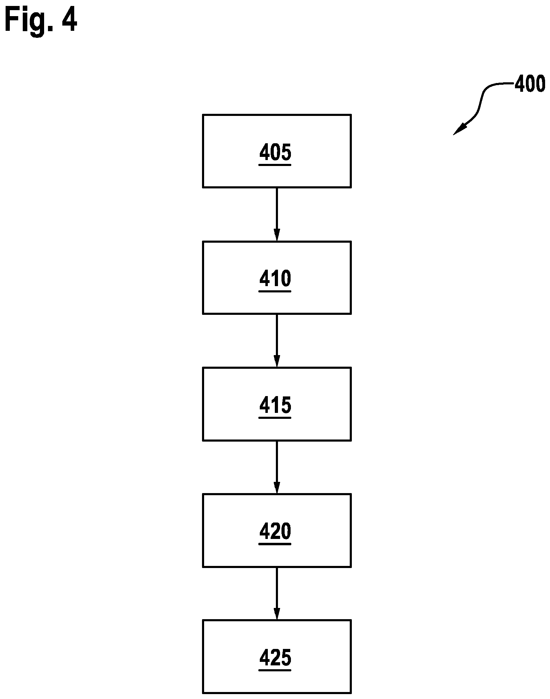

Fig. 4 zeigt ein Ablaufdiagramm eines Verfahrens an Bord des Kraftfahrzeugs 102 von Fig. 1. In einem ersten Schritt 405 wird der Anlasser 115 im Bordnetz 100 des Kraftfahrzeugs 102 in Serie mit dem Begrenzungswiderstand 110 betrieben.

In einem folgenden Schritt 410 werden Spannungswerte U_in und U_out am Begrenzungswiderstand 110 bestimmt. Dazu wird zunächst gewartet, bis induktive Effekte im Stromkreis 140 abgeklungen sind. Dann wird U_out bestimmt, auf dessen Basis Widerstände im Ausgangskreis bestimmt, der sich aus dem Begrenzungswiderstand 110, der zweiten Leitung 125 und dem Anlasser 115 zusammensetzt. Zur Bestimmung von Widerständen im Eingangskreis, der sich aus der Batterie 105 und der ersten Leitung 120 zusammensetzt, werden ebenfalls nach dem Abklingen der induktiven Effekte im Stromkreis 140 zwei Messungen von U_in in einem vorbestimmten zeitlichen Abstand durchgeführt. Die erste dieser Messungen kann gleichzeitig mit der Bestimmung von U_out erfolgen.

Auf der Basis der Messungen wird in einem Schritt 415 ein Schwellenwert für den durch den Begrenzungswiderstand 110 fließenden Strom bestimmt. Nachfolgend wird in einem Schritt 420 fortlaufend der durch den Begrenzungswiderstand 110 fließende Strom auf der Basis zeitgleicher Bestimmungen von U_in und U_out durchgeführt, wozu die Differenz von U_in und U_out durch den Widerstandswert des Begrenzungswiderstands 110 dividiert wird.

Unterschreitet der bestimmte Strom den zuvor bestimmten Schwellenwert, so wird in einem Schritt 425 der Begrenzungswiderstand 110 verringert und der Anlasser 115 in Serie mit dem verringerten Begrenzungswiderstand 110 an der Batterie 105 betrieben. Aufgrund der Bestimmungsweise des Schwellenwerts im Schritt 415 ist sicher gestellt, dass die an der Batterie 105 anliegende Spannung U_Sternpkt beim Verringern des Begrenzungswiderstands 110 nicht unter eine vorbestimmte Spannung einbricht. Danach ist das Verfahren 400 beendet.

**Patentansprüche**

1. Verfahren (400) zur Aufrechterhaltung einer vorbestimmten Bordspannung in einem batteriegestützten Bordnetz (100) während des Betriebs eines elektrischen Anlassers (115), folgende Schritte umfassend:

   - Betreiben (405) des elektrischen Anlassers (115) am Bordnetz (100) während einer ersten Phase in Serie mit einem Begrenzungswiderstand (110), um den durch den Anlasser (115) fließenden Strom zu begrenzen; und
   - Betreiben (425) des elektrischen Anlassers (115) am Bordnetz (100) während einer zweiten Phase mit einem verringerten Begrenzungswiderstand (110), um eine vom Anlasser (115) umgesetzte Leistung zu erhöhen, wobei ein Übergang von der ersten zur zweiten Phase auf der Basis von während der ersten Phase am Begrenzungswiderstand (110) abgetasteten elektrischen Kenngrößen (U_in, U_out) gesteuert (410-420) wird,
   - Bestimmen (415) eines Schwellenwerts während der ersten Phase; und
   - Einleiten (425) der zweiten Phase, wenn der durch den Begrenzungswiderstand fließende Strom den bestimmten Schwellenwert unterschreitet, wobei der Schwellenwert bestimmt wird auf einen Wert, der höchstens so groß ist wie $I_1 \dfrac{R_K + R_2}{R_K + R_1}$;

   wobei $I_1$ der während der ersten Phase fließende Strom;

   $R_K$ die Summe der ohmschen Widerstände in einem Stromkreis der eine Batterie (105) des Bordnetzes (100), eine erste Leitung (120) von der Batterie (105) zu dem Begrenzungswiderstand (110), eine zweite Leitung (125) vom Begrenzungswiderstand (110) zum Anlasser (115) und den Anlasser (115) umfasst;

   $R_1$ der Begrenzungswiderstand (110); und

   $R_2$ der verringerte Begrenzungswiderstand (110) ist, **dadurch gekennzeichnet, dass** $R_K$ folgendermaßen bestimmt wird:

   - Bestimmen (410) von Spannungen an beiden Anschlüssen des Begrenzungswiderstands (110) zu einem Zeitpunkt $t_1$;

- Bestimmen (415) der Summe der Widerstände der Batterie und der von der Batterie zum Begrenzungswiderstand (110) führenden Leitung auf der Basis der zum Zeitpunkt $t_1$ bestimmten Spannungen;
- Bestimmen (415) von Spannungen an beiden Anschlüssen des Begrenzungswiderstands (110) zu voneinander unterschiedlichen Zeitpunkten $t_2$ und $t_3$ nach dem Abklingen von induktiven Effekten, und
- Bestimmen (415) der Summe der Widerstände der vom Begrenzungswiderstand (110) zum Anlasser (115) führenden zweiten Leitung (125) und des Anlassers (115) auf der Basis der zu den Zeitpunkten $t_2$ und $t_3$ bestimmten Spannungen.

2. Verfahren (400) nach Anspruch 1, wobei zum Zeitpunkt $t_1$ induktive Einflüsse im Bereich der Batterie (105) und der ersten Leitung (120) abgeklungen sind und eine Drehzahl des Anlassers (115) so gering ist, dass eine elektromotorische Gegenkraft des Anlassers (115) vernachlässigbar gering ist.

3. Verfahren (400) nach Anspruch 1 oder 2, wobei der Zeitpunkt $t_3$ so weit nach dem Zeitpunkt $t_2$ liegt, dass durch den Begrenzungswiderstand (110) fließende Ströme zu den Zeitpunkten $t_2$ und $t_3$ sich signifikant voneinander unterscheiden.

4. Verfahren (400) nach einem der Ansprüche 1 bis 3, wobei an den beiden Anschlüssen des Begrenzungswiderstands (110) weitere Spannungen zu weiteren Zeitpunkten bestimmt werden und die Bestimmung der Summe der Widerstände der vom Begrenzungswiderstand (110) zum Anlasser (115) führenden Leitung und des Anlassers (115) bezüglich mehreren, zu unterschiedlichen Zeitpunkten bestimmten Spannungen erfolgt.

5. Verfahren (400) nach Anspruch 1, ferner umfassend die Schritte des:

- Bestimmens eines Zeitpunkts auf der Basis von Spannungsmessungen am Begrenzungswiderstand (110) während der ersten Phase; und des
- Einleitens der zweiten Phase, wenn der bestimmte Zeitpunkt erreicht ist.

6. Vorrichtung zur Aufrechterhaltung einer vorbestimmten Spannung in einem batteriegestützten Bordnetz (100) während des Betriebs eines elektrischen Anlassers (115), umfassend:

- einen steuerbaren Begrenzungswiderstand (215) zum Betreiben des Anlassers (115) am Bordnetz (100) in Serie mit dem Widerstand;
- eine erste und eine zweite Abtasteinrichtung (225, 230) zur Aufnahme von Spannungen an unterschiedlichen Anschlüssen des Begrenzungswiderstands (215);
- einen Zeitgeber (240);
eine Steuereinrichtung (235) zur Verringerung des Begrenzungswiderstands (215) entsprechend dem Verfahren (400) nach einem der vorangehenden Ansprüche.

## Claims

1. Method (400) for maintaining a predetermined vehicle electrical system voltage in a battery-assisted vehicle electrical system (100) during operation of an electric starter motor (115), comprising the following steps of:

- operating (405) the electric starter motor (115) from the vehicle electrical system (100) during a first phase in series with a limiting resistor (110) in order to limit the current flowing through the starter motor (115); and
- operating (425) the electric starter motor (115) from the vehicle electrical system (100) during a second phase with a reduced limiting resistor (110) in order to increase power converted by the starter motor (115),
wherein a transition from the first phase to the second phase is controlled (410-420) on the basis of electrical characteristic variables (U_in, U_out) sensed at the limiting resistor (110) during the first phase,
- determining (415) a threshold value during the first phase; and
- initiating (425) the second phase if the current flowing through the limiting resistor undershoots the determined threshold value, wherein the threshold value is determined to be a value which is at least as large as $I_1 \frac{R_K + R_2}{R_K + R_1};$ where $I_1$ is the current flowing during the first phase;
$R_K$ is the sum of the non-reactive resistances in a circuit comprising a battery (105) of the vehicle electrical system (100), a first line (120) from the battery (105) to the limiting resistor (110), a second line (125) from the limiting resistor (110) to the starter motor (115) and the starter motor (115);

$R_1$ is the limiting resistor (110); and

$R_2$ is the reduced limiting resistor (110), **characterized in that** $R_K$ is determined as follows:

- determining (410) voltages at both connections of the limiting resistor (110) at a time $t_1$;
- determining (415) the sum of the resistances of the battery and of the line leading from the battery to the limiting resistor (110) on the basis of the voltages determined at the time $t_1$;
- determining (415) voltages at both connections of the limiting resistor (110) at mutually different times $t_2$ and $t_3$ after inductive effects have decayed, and
- determining (415) the sum of the resistances of the second line (125) leading from the limiting resistor (110) to the starter motor (115) and of the starter motor (115) on the basis of the voltages determined at the times $t_2$ and $t_3$.

2. Method (400) according to Claim 1, wherein inductive inferences in the region of the battery (105) and the first line (120) have decayed at the time $t_1$ and a speed of the starter motor (115) is so low that a back electromotive force of the starter motor (115) is negligibly low.

3. Method (400) according to Claim 1 or 2, wherein the time $t_3$ is so far after the time $t_2$ that currents flowing through the limiting resistor (110) differ significantly from one another at the times $t_2$ and $t_3$.

4. Method (400) according to one of Claims 1 to 3, wherein further voltages are determined at further times at the two connections of the limiting resistor (110), and the sum of the resistances of the line leading from the limiting resistor (110) to the starter motor (115) and of the starter motor (115) is determined with respect to a plurality of voltages determined at different times.

5. Method (400) according to Claim 1, also comprising the steps of:

- determining a time on the basis of voltage measurements at the limiting resistor (110) during the first phase; and
- initiating the second phase when the determined time has been reached.

6. Apparatus for maintaining a predetermined voltage in a battery-assisted vehicle electrical system (100) during operation of an electric starter motor (115), comprising:

- a controllable limiting resistor (215) for operating the starter motor (115) from the vehicle electrical system (100) in series with the resistor;
- a first sensing device and a second sensing device (225, 230) for picking up voltages at different connections of the limiting resistor (215) ;
- a timer (240);
a control device (235) for reducing the limiting resistor (215) in accordance with the method (400) according to one of the preceding claims.

**Revendications**

1. Procédé (400) permettant de maintenir une tension de bord prédéterminée dans un réseau de bord alimenté par batterie (100) pendant le fonctionnement d'un démarreur électrique (115), comprenant les étapes suivantes consistant à :

- faire fonctionner (405) le démarreur électrique (115) sur le réseau de bord (100) pendant une première phase en série avec une résistance de limitation (110) pour limiter le courant passant par le démarreur (115) ; et
- faire fonctionner (425) le démarreur électrique (115) sur le réseau de bord (100) pendant une deuxième phase avec une résistance de limitation (110) réduite pour augmenter une puissance transformée par le démarreur (115),

une transition de la première à la deuxième phase étant commandée (410-420) sur la base de grandeurs caractéristiques électriques (U_in, U_out) échantillonnées pendant la première phase au niveau de la résistance de limitation (110),
- déterminer (415) une valeur seuil pendant la première phase ; et

- entamer (425) la deuxième phase si le courant passant par la résistance de limitation soupasse la valeur seuil déterminée, la valeur seuil étant déterminée comme étant une valeur qui est au plus égale à $I_1 \frac{R_K+R_2}{R_K+R_1}$ ; où $I_1$ est le courant circulant pendant la première phase ;

$R_K$ est la somme des résistances ohmiques dans un circuit électrique qui comprend une batterie (105) du réseau de bord (100), une première ligne (120) de la batterie (105) à la résistance de limitation (110), une deuxième ligne (125) de la résistance de limitation (110) au démarreur (115) et le démarreur (115) ;

$R_1$ est la résistance de limitation (110) ; et

$R_2$ est la résistance de limitation (110) réduite, **caractérisé en ce que** $R_K$ est déterminé comme suit :

- déterminer (410) des tensions aux deux bornes de la résistance de limitation (110) à un instant $t_1$ ;
- déterminer (415) la somme des résistances de la batterie et de la ligne allant de la batterie à la résistance de limitation (110) sur la base des tensions déterminées à l'instant $t_1$ ;
- déterminer (415) des tensions aux deux bornes de la résistance de limitation (110) à des instants $t_2$ et $t_3$ différents l'un de l'autre après l'affaiblissement des effets inductifs, et
- déterminer (415) la somme des résistances de la deuxième ligne (125) allant de la résistance de limitation (110) au démarreur (115) et du démarreur (115) sur la base des tensions déterminées aux instants $t_2$ et $t_3$.

2. Procédé (400) selon la revendication 1, dans lequel à l'instant $t_1$, les influences inductives au niveau de la batterie (105) et de la première ligne (120) se sont affaiblies, et une vitesse de rotation du démarreur (115) est si faible qu'une force antagoniste électromotrice du démarreur (115) est négligeable.

3. Procédé (400) selon la revendication 1 ou 2, dans lequel l'instant $t_3$ est situé si loin après l'instant $t_2$ que les courants passant par la résistance de limitation (110) sont nettement différents les uns des autres aux instants $t_2$ et $t_3$.

4. Procédé (400) selon l'une quelconque des revendications 1 à 3, dans lequel, aux deux bornes de la résistance de limitation (110), d'autres tensions sont déterminées à d'autres instants, et la détermination de la somme des résistances de la ligne allant de la résistance de limitation (110) au démarreur (115) et du démarreur (115) est effectuée concernant plusieurs tensions déterminées à différents instants.

5. Procédé (400) selon la revendication 1, comprenant en outre les étapes consistant à :

- déterminer un instant sur la base de mesures de tension à la résistance de limitation (110) pendant la première phase ; et
- entamer la deuxième phase si l'instant déterminé est atteint.

6. Dispositif permettant de maintenir une tension prédéterminée dans un réseau de bord alimenté par batterie (100) pendant le fonctionnement d'un démarreur électrique (115), comprenant :

- une résistance de limitation (215) pouvant être commandée pour faire fonctionner le démarreur (115) sur le réseau de bord (100) en série avec la résistance ;
- un premier et un deuxième dispositif d'échantillonnage (225, 230) pour capter des tensions à différentes bornes de la résistance de limitation (215) ;
- un temporisateur (240) ;
un dispositif de commande (235) pour diminuer la résistance de limitation (215) selon le procédé (400) selon l'une quelconque des revendications précédentes.

**Fig. 1**

**Fig. 2**

# Fig. 3

# Fig. 4

400

```
┌─────────────┐
│     405     │
└─────────────┘
       │
       ▼
┌─────────────┐
│     410     │
└─────────────┘
       │
       ▼
┌─────────────┐
│     415     │
└─────────────┘
       │
       ▼
┌─────────────┐
│     420     │
└─────────────┘
       │
       ▼
┌─────────────┐
│     425     │
└─────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1041277 A1